# FASCICULE DE BREVET EUROPEEN

(11) **EP 3 002 484 B1**
(45) Date de publication et mention de la délivrance du brevet: **01.11.2017**
(21) Numéro de dépôt: 15182353.1
(22) Date de dépôt: 25.08.2015
(51) Int. Cl.: F16H 39/02, B60K 17/356, F16H 61/44, F16H 61/4035

(54) **DISPOSITIF DE RÉPARTITION D'HUILE AVEC CLAPET ANTI-RETOUR**
ÖLVERTEILUNGSVORRICHTUNG MIT RÜCKSCHLAGVENTIL
OIL DISTRIBUTION DEVICE WITH CHECK VALVE

(30) Priorité: 26.08.2014 FR 1457994
(43) Date de publication de la demande: 06.04.2016
(73) Titulaire: Poclain Hydraulics Industrie, 60410 Verberie (FR)
(72) Inventeur: HEREN, Jean, André, 60410 VERBERIE (FR); D'HERSIGNERIE, Cyrille, 60410 VERBERIE (FR)
(74) Mandataire: Regimbeau

(56) Documents cités:
- DE-A1- 19 833 942
- FR-A6- 2 044 296

## Description

### DOMAINE TECHNIQUE GENERAL

L'invention concerne le domaine des circuits hydrauliques d'assistance à la motricité utilisés notamment pour des véhicules.

En particulier, l'invention concerne la gestion du débit de pompes d'alimentation.

### ETAT DE L'ART

On connaît l'utilisation d'appareils hydrauliques pour réaliser l'entrainement de véhicules, avec notamment des applications pour des engins agricoles (type récolteuse, moissonneuse batteuse ou automoteur de pulvérisation) ou de chantier.

Ces véhicules présentent généralement deux types de fonctionnement :
- Un fonctionnement en condition de travail : les vitesses sont assez faibles, typiquement inférieures à 20 km/h et le besoin en couple est important (véhicule chargé, pente, terrain difficile, etc.)
- Un fonctionnement en condition de transfert : les vitesses sont plus élevées, typiquement supérieures à 20 km/h et le besoin en couple est plus faible (véhicule à vide, absence de pente, terrain praticable, etc.)

Dans l'ensemble du présent texte, on désignera par appareil hydraulique un appareil pouvant fonctionner en tant que moteur ou en tant que pompe hydraulique.

Ces véhicules comprennent des moteurs hydrauliques et une transmission hydrostatique, qui peuvent fournir de la puissance à chacun des essieux, en particulier chacune des roues.

Lors de passage dans des zones « difficiles » (forte pente par exemple), il peut survenir une perte d'adhérence sur une ou plusieurs roues, ce qui nuit aux performances du véhicule.

Il existe actuellement des solutions pour limiter ces écueils.

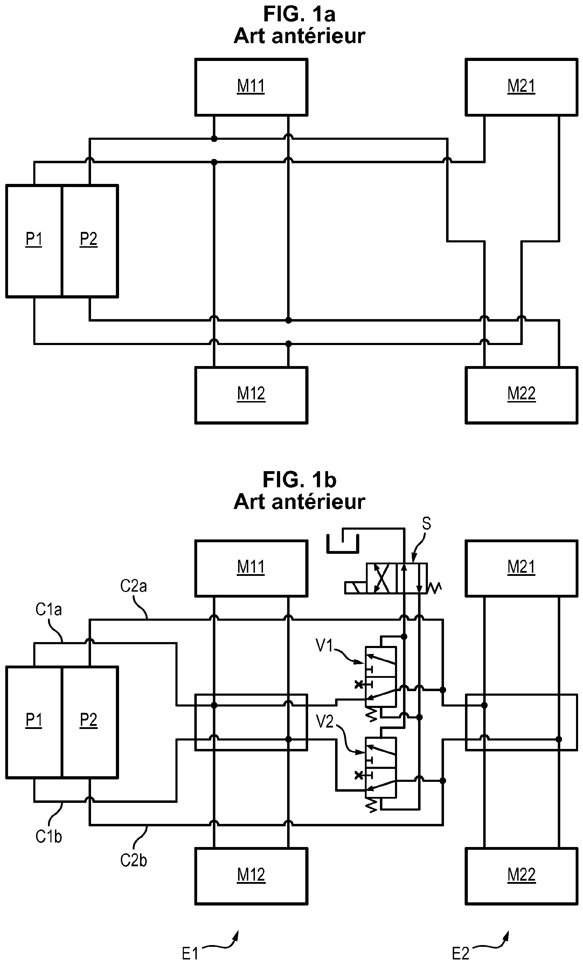

Dans le cas des véhicules comprenant comme illustrés sur les **figures 1a, 1b****,** deux pompes P1, P2 et un moteur M11, M12, M21, M22 (pouvant être de cylindrée variable) sur chacune des roues des essieux avant E1 et arrière E2, on trouve en général deux façons de raccorder les moteurs aux pompes :
- En circuit croisé (voir **figure 1a****)**: la pompe P1 va être raccordée par exemple aux moteurs avant gauche M12 et arrière droit M21 et l'autre pompe P2 aux moteurs avant droit M11 et arrière gauche M22.
   Une telle configuration permet de changer la cylindrée des moteurs par essieu E1, E2, sans devoir modifier les débits relatifs de chaque pompe P1, P2. En revanche, la perte d'adhérence sur un essieu complet limite fortement les performances du véhicule, notamment en cas de forte pente (montée ou descente). Une des solutions consiste à ajouter des diviseurs (ou limiteurs) de débit à installer en sortie de pompes P1, P2. Ceux-ci impliquent un coût supplémentaire ainsi qu'une gestion délicate.
- En circuit séparé par essieu (voir **figure 1b**) : chaque pompe est reliée à un seul essieu, c'est-à-dire que :
   ∘ la pompe P1 alimente les moteurs M11, M12 de l'essieu avant E1 par un circuit d'alimentation C1a et de retour C1b et
   ∘ la pompe P2 alimente les moteurs M21, M22 de l'essieu arrière E2 par un circuit d'alimentation C2a et de retour C2b.

Néanmoins, un échange entre les deux circuits hydrauliques d'alimentation C1a, C2a est possible grâce à une valve V1 possédant une position passante et une bloquante, et un échange entre les deux circuits de retour C1b, C2b est possible grâce à une valve V2 possédant une position passante et une bloquante. Les deux valves V1, V2 sont pilotées par un sélecteur S commandés par une pédale typiquement.

En situation « normale », c'est-à-dire non « difficile », les deux valves V1, V2 sont passantes et chaque pompe P1, P2 participe à la puissance reçue par les deux essieux E1, E2. En situation difficile, les valves V1, V2 sont bloquantes et chaque pompe n'alimente plus qu'un seul essieu. Une telle configuration complique le changement de cylindrée par essieu et conduit à introduire des valves d'intercommunication entre les circuits, ce qui signifie en fait de les réunir.

En outre, les deux solutions mentionnées nécessitent une vigilance forte quant à la précision des commandes de pompes et des niveaux de pression dans chaque circuit, de sorte que les moteurs sur chaque essieu travaillent ensemble et de façon équilibrée.

Enfin, il faut aussi prévoir une commande pour ouvrir l'intercommunication entre les circuits, lors des fonctionnements en mode de transfert (c'est-à-dire généralement sur route, faible charge et des vitesses supérieures à 20km/h), comparativement à un mode de travail (c'est-à-dire généralement en champs, forte charge et vitesse inférieure à 20 km/h).

L'invention propose de supprimer ces éléments d'intercommunication et leur commande, tout en proposant des performances comparables. Le document DE 198 33 942 A1 divulgue un dispositif de transmission hydraulique et un procédé d'utilisation d'un véhicule tels que décrits dans les préambules des revendications 1 et 10.

### PRESENTATION DE L'INVENTION

Pour cela, l'invention propose un dispositif de transmission hydraulique pour véhicule, ledit dispositif comprenant :
- Une première pompe et une deuxième pompe, chaque pompe comprenant une admission et un refoulement,
- Un premier appareil hydraulique et un deuxième appareil hydraulique, chaque appareil comprenant une admission et un refoulement,
- Un premier circuit d'alimentation reliant le refoulement de la première pompe à l'admission du premier appareil et,
- Un deuxième circuit d'alimentation reliant le refoulement de la deuxième pompe à l'admission du deuxième appareil et
dans lequel:
- un clapet anti-retour entre les circuits d'alimentation le clapet ayant un sens passant du premier vers le deuxième circuit d'alimentation,
- un premier circuit de retour reliant le refoulement du premier appareil aux admissions desdites pompes,
- un deuxième circuit de retour reliant le refoulement du deuxième appareil aux admissions desdites pompes,
   de sorte que les circuits de retour sont en communication fluidique permanente entre eux par une jonction.

L'invention permet ainsi une simplification du circuit tout en diminuant le coût de la solution. En outre, une diminution des pertes de charges est observée par rapport à l'art antérieur, et il n'y a pas de pilotage à prévoir, le clapet anti-retour étant autonome et mécaniquement contrôlé par les pressions et débits dans les circuits d'alimentation. De plus, le clapet anti-retour permet d'obtenir un fonctionnement satisfaisant sans recourir à un pilotage fin des deux pompes. Enfin, ce type de technique de circuit en boucle fermée est applicable de façon générale, quel que soit le nombre de roues, la variabilité des cylindrées, la technologie des moteurs et des pompes.

Avantageusement, l'invention comprend les caractéristiques suivantes, prises seules ou en combinaison :
- le premier circuit de retour est relié à l'admission de la première pompe et le second circuit de retour est relié à l'admission de la deuxième pompe, les deux circuits de retour étant reliés entre eux par un circuit de communication,
- le premier circuit de retour est relié à l'admission de la deuxième pompe et le second circuit de retour est relié à l'admission de la première pompe, les deux circuits de retour étant reliés entre eux par un circuit de communication,
- le deuxième appareil possède une cylindrée plus importante que le premier appareil,
- le dispositif tel que décrit précédemment comprend en outre un bloc d'échange apte à prélever de l'huile pour son traitement, ledit bloc d'échange comprenant un circuit de prélèvement principal prélevant le fluide entre :
   - la jonction des circuits de retour et
   - l'admission de la première pompe,
   de sorte que le bloc d'échange peut prélever de l'huile issue à la fois du premier et du deuxième appareil,
- le bloc d'échange comprend en outre un circuit de prélèvement secondaire prélevant le fluide entre :
   - l'admission du premier appareil et
   - le refoulement de la première pompe,
   les deux circuits de prélèvements étant reliés au niveau d'un sélecteur apte à fermer les deux circuits ou à relier l'un des deux circuit à un circuit de drainage en fermant l'autre,
- les pompes sont des pompes à commande électrique proportionnelle, la deuxième pompe ayant un débit maximal supérieur inférieur ou égal au débit maximal admissible dans le deuxième appareil,
- pour une vitesse de rotation des appareils déterminée, le débit de la deuxième pompe est inférieur à l'appel de débit du deuxième appareil nécessaire, et le débit de la première pompe est supérieur à l'appel de débit du premier appareil, de sorte que la première pompe est apte à compléter l'appel de débit du deuxième appareil via le clapet anti-retour,

L'invention concerne aussi un véhicule comprenant un dispositif tel que décrit précédemment, possédant un sens de déplacement privilégié définissant des roues avant et arrière, dans lequel le premier appareil hydraulique motorise au moins une roue avant et le deuxième appareil hydraulique motorise une roue arrière.

L'invention concerne également un procédé d'utilisation d'un véhicule tel que précédemment décrit, ledit véhicule ayant un deuxième appareil de cylindrée supérieure au premier appareil, ledit procédé comprenant une étape durant laquelle le clapet anti-retour envoie un débit d'huile issu de la première pompe vers le deuxième appareil.

Avantageusement, le procédé comprend les caractéristiques suivantes prises seules ou en combinaison :
- le procédé comprend une séquence d'étapes dans lesquelles le clapet anti-retour passe d'un état passant à un état bloquant lorsque :
   ∘ Les roues avant commencent à patiner lors d'une marche avant,
   ∘ Les roues arrière se bloquent lors d'une retenue en marche avant,
- le procédé comprend une séquence d'étapes dans lesquelles le clapet anti-retour passe d'un état bloquant à un état passant lorsque :
   ∘ Les roues avant arrêtent de patiner lors d'une marche avant,
   ∘ Les roues arrière se débloquent lors d'une retenue en marche avant,
- le véhicule est en marche arrière, et le procédé comprend les étapes de :
   ∘ Détection d'un glissement d'une roue arrière,
   ∘ Ajustement du débit de la première pompe pour fournir au plus le débit appelé par le premier appareil.
- Le véhicule est en marche avant, et le procédé comprend les étapes de :
   ∘ Détection d'un glissement d'une roue avant,
   ∘ Ajustement du débit de la deuxième pompe pour fournir l'intégralité du débit appelé par le deuxième appareil,
- les roues avant du véhicule sont des roues directrices, et le procédé comprend les étapes de :
   ∘ Détection d'un virage effectué par le véhicule,
   ∘ Ajustement du débit des première et deuxième pompes pour fournir l'intégralité des débits appelés respectivement par le premier appareil et le deuxième appareil.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1a, 1b représentent l'état de la technique,
- la figure 2 représente un dispositif conforme à un mode de réalisation de l'invention monté sur un véhicule,
- les figures 3a, 3b, 3c représentent différents mode de réalisation du dispositif,
- la figure 4 représente le dispositif précédent avec le véhicule en marche avant, sans patinage,
- la figure 5 représente le dispositif précédent avec le véhicule en marche arrière, sans patinage,
- la figure 6a représente le dispositif précédent avec le véhicule en marche arrière et un patinage des roues arrière, la figure 6b illustre cette situation,
- la figure 7 représente un dispositif conforme à un mode de réalisation de l'invention monté sur un véhicule, avec le véhicule en marche avant, sans patinage, en condition de transfert,
- la figure 8a représente un dispositif avec le véhicule en marche avant, et patinage des roues avant ; la figure 8b illustre cette situation,
- la figure 9a représente un dispositif avec le véhicule en marche avant, et en retenue et sans blocage des roues; la figure 9b illustre cette situation,
- la figure 10a représente un dispositif avec le véhicule en marche avant, et en retenue et avec blocage des roues arrière; la figure 10b illustre cette situation.
- la figure 11a représente un dispositif avec le véhicule en virage ; la figure 11b illustre cette situation.

### DESCRIPTION DETAILLEE

Pour des raisons de symétrie et de simplification, seul un côté du dispositif 1 tel qu'implanté sur un véhicule 2 va être décrit premièrement.

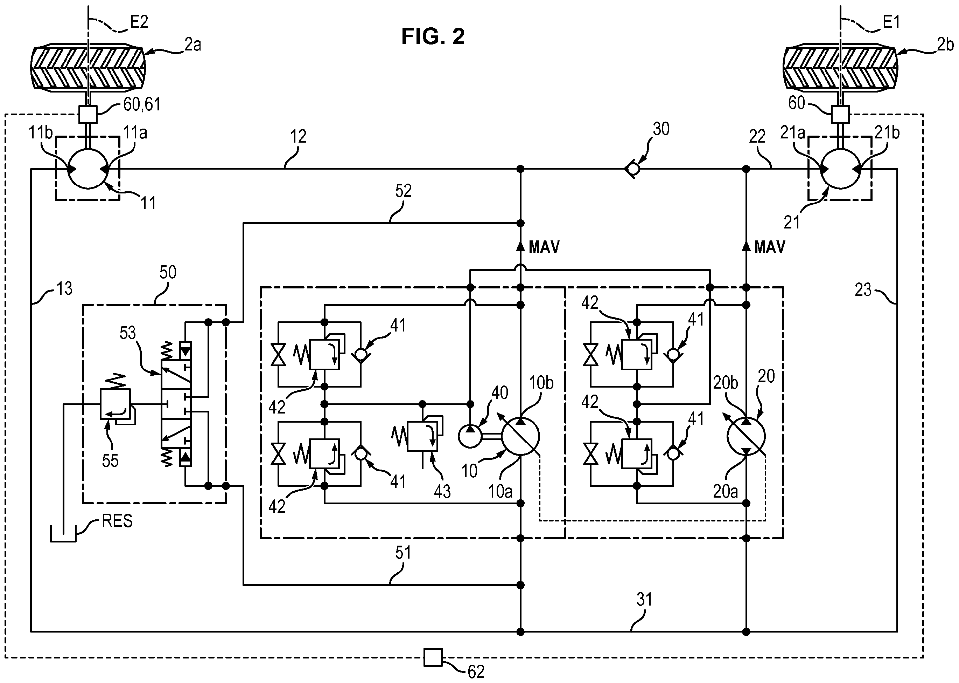

En référence à la **figure 2****,** l'invention comprend :
- Une première pompe 10 et une deuxième pompe 20, chaque pompe 10, 20 comprenant une admission 10a, 20a et un refoulement 10b, 20b,
- Un premier appareil hydraulique 11 et un deuxième appareil hydraulique 21, chaque appareil 11, 21 comprenant une admission 11a, 21a et un refoulement 11b, 21b,

L'invention comprend en outre :
- un clapet anti-retour 30 situé entre les circuits d'alimentation 12, 22, le clapet 30 ayant un sens passant du premier 12 vers le deuxième circuit d'alimentation 22,
- un premier circuit de retour 13 reliant le refoulement 11b du premier appareil 10 aux admissions 10b, 20b desdites pompes 10, 20,
- un deuxième circuit de retour 23 reliant le refoulement du deuxième appareil 20 aux admissions 10b, 20b desdites pompes 10,20,
   de sorte que les circuits de retour 13, 23sont en communication fluidique permanente entre eux par une jonction 31.

Entre les circuits d'alimentation 12, 22, la communication fluidique se fait si la pression à l'intérieur du premier circuit d'alimentation 12 est supérieure à la pression à l'intérieur du deuxième circuit d'alimentation 22 : le clapet anti-retour 30 est alors ouvert. Un tel clapet 30 permet de limiter les pertes de charges en utilisation par rapport aux dispositifs de l'art antérieur. Par exemple, une accumulation d'huile dans le premier circuit d'alimentation 12 provoquera une surpression qui ouvrira le clapet anti-retour 30.
En outre, le clapet anti-retour 30 permettant de répartir du débit d'huile du premier circuit d'alimentation 12 vers le deuxième circuit 22, on peut obtenir un fonctionnement du dispositif 1 satisfaisant sans que les débits des pompes 10, 20 soient précisément pilotés.
Il s'agit ainsi d'un circuit en boucle fermée.

On rappelle ici qu'un appareil hydraulique est une machine pouvant fonctionner comme un moteur, c'est-à-dire que la puissance hydraulique est convertie en puissance mécanique, ou comme une pompe, c'est-à-dire que la puissance mécanique est convertie en puissance hydraulique. D'une façon largement majoritaire, en utilisation courante, les appareils 11, 21 fonctionnent en tant que moteurs.

Selon un mode de réalisation, ils sont typiquement montés sur des essieux E1, E2. En outre, les appareils hydrauliques tournent avantageusement à la vitesse des roues, ce qui signifie qu'il n'y a pas d'étage de réduction entre la sortie d'un appareil et la roue que ce dernier entraine.
Les appareils hydrauliques sont avantageusement des machines à pistons radiaux et cames multilobes.
Les appareils hydrauliques sont avantageusement à carter tournant sur une fusée de roue, c'est-à-dire que la rotation du carter entraine la roue ou bien à carter fixe et arbre tournant, c'est-à-dire que c'est un arbre de sortie de l'appareil qui entraine la roue.
Selon un autre mode de réalisation, les appareils hydrauliques incluent le roulement de la roue et portent chacun une roue (appellation de « moteur roue »), il n'y a alors pas d'essieu.
Similairement, les pompes 10, 20 peuvent fonctionner aussi en tant que moteurs. En utilisation courante, les pompes 10, 20 fonctionnent effectivement en tant que pompes.
Les pompes sont avantageusement des machines à pistons axiaux et plateau oscillant.
En outre, les appareils hydrauliques 11, 12 peuvent fonctionner dans les deux sens, c'est-à-dire selon la rotation horaire et antihoraire. De cette façon, les termes « admission » et « refoulement » ne sont nullement limitatifs et un orifice d'admission peut aussi être, le cas échéant, alternativement un orifice de refoulement.
Similairement, les pompes 10, 20 peuvent fonctionner dans les deux sens.
Les pompes 10, 20 peuvent être à cylindrée variable ou fixe et sont typiquement alimentées par un moteur thermique (non représenté sur les figures).

Le dispositif comprend en outre une pompe de gavage 40 et un réservoir d'huile Res, la pompe de gavage puisant l'huile depuis le réservoir Res.

La pompe de gavage 40 est reliée à chaque circuit d'alimentation 12, 22 et à chaque circuit de retour 13, 23 par un clapet anti-retour 41 respectif (passant du gavage vers les circuits) et un limiteur de pression 42 respectif, de façon à permettre le gavage des circuits en huile (via les quatre clapets anti-retours 41) en protégeant les pompes d'une surpression (grâce aux quatre limiteurs de pression 42). Un limiteur de pression 43 se trouve aussi entre la sortie de la pompe de gavage 40 et le réservoir Res.
On peut aussi trouver une vanne en parallèle desdits clapets 41 et limiteurs 42, afin de permettre le remorquage du véhicule et avoir un mode en roue libre.
Ces éléments sont connus de l'homme du métier et ne seront pas détaillés outre mesure.

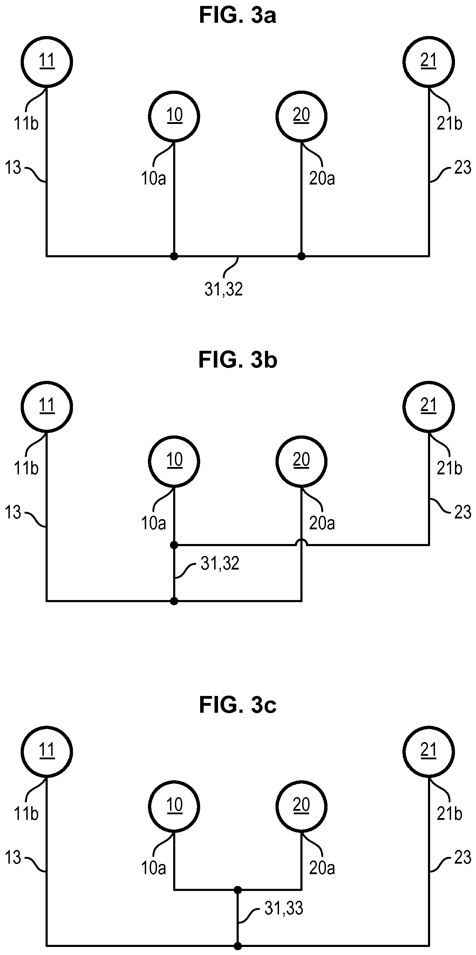

Les connexions entre les circuits de retour 13, 23 et les pompes 10, 20, ainsi que la jonction 31 peuvent être réalisés de différentes façons :
- Schéma A (voir **figure 3a**) : le premier circuit de retour 13 est relié à l'admission 10a de la première pompe 10 et le second circuit de retour 23 est relié à l'admission 20a de la deuxième pompe 20. La jonction 31 est un circuit de communication 32 (telle que représentée sur les **figures 2****,** **3a****,** **4 à 9****)** qui relie les deux circuits de retour 13, 23, de sorte que les deux circuits de retour 13, 23 sont en communication *via* ledit circuit de communication 32,
- Schéma B (voir **figure 3b****)**: le premier circuit de retour 13 est relié à l'admission 20ade la deuxième pompe 20 et le second circuit de retour 23 est relié à l'admission 10a de la première pompe 10. La jonction 31 est le circuit de communication 32 qui relie les deux circuits de retour 13, 23, de sorte que les deux circuits de retour 13, 23 sont en communication *via* ledit circuit de communication 32,
- Schéma C (voir **figure 3c****)** : les circuits de retour 13, 23 se rejoignent sous la forme d'une portion commune 33 (qui est la jonction 31), la portion commune 33 se redivisant pour relier les admissions 10b, 20b respectivement des pompes 10, 20, la portion commune 33 agissant comme un mélangeur.

D'un point de vue technique, le schéma A est le plus simple à réaliser (moins de tuyauterie). En revanche, le schéma B permet une circulation de l'huile en « 8 », c'est-à-dire que la majeure partie de l'huile circule successivement de la première pompe 10 vers le premier appareil 11, puis vers la deuxième pompe 20 et le deuxième appareil 21. Enfin, le schéma C, qui permet un bon mélange de l'huile des deux circuits, est plus complexe à réaliser : la portion commune 33 subit un débit quasiment doublé par rapport aux autres portions des circuits et nécessite une tuyauterie adaptée.

Le dispositif 1 comprend aussi avantageusement un bloc d'échange 50 dont le but est de permettre le renouvellement de l'huile et le refroidissement des circuits. En effet, lors de ses cycles de fonctionnement, l'huile subit un échauffement, notamment par pertes de charge et frottements et s'encrasse, nuisant ainsi à la performance du véhicule 2 et altérant la durée d'utilisation du véhicule 2.
Pour cela, le bloc d'échange 50 comprend un circuit de prélèvement principal 51, ledit circuit 51 prélevant le fluide entre la jonction 31 des circuits de retour 13, 23 et l'admission 10a de la première pompe 10 (dans le cas des schémas B et C, il peut s'agir de l'admission 20a de la deuxième pompe 20, puisque l'huile est mélangée auparavant). Le circuit 51 est relié à un circuit de drainage 54 par l'intermédiaire d'un sélecteur 53 possédant une position passante et une position bloquante. Le circuit de drainage 54 comprend un limiteur de pression 55 et débouche dans le réservoir Res où l'huile est restaurée par la suite. Les avantages d'un tel placement seront explicités par la suite, lors de la description des différentes mises en situation.
Complémentairement, le bloc d'échange 50 comprend aussi un circuit de prélèvement secondaire 52 prélevant le fluide entre l'admission lia du premier appareil 11 et le refoulement 10b de la première pompe 10.

Le sélecteur 53 est alors préférablement une valve trois ports trois positions apte à fermer les deux circuits de prélèvement 51, 52 et ou à relier l'un des deux circuits 51, 52 au circuit de drainage 54 en fermant l'autre circuit 52, 51.
Le sélecteur 53 sélectionne parmi le circuit principal 51 et le circuit secondaire 52 celui qui a la plus basse pression et le relie au circuit de drainage 54.
Le prélèvement d'huile pour le bloc d'échange ne se fait donc que sur les premiers circuits d'alimentation 12 et de retour 13.

Grâce aux l'architectures de la transmission hydrostatique précédemment décrite et à la localisation de la prise de fluide, qui permet de renouveler à la fois l'huile des premiers et des deuxièmes circuits, il est possible de n'utiliser qu'un seul bloc d'échange 50 contre deux dans l'art antérieur (un pour chaque circuit), d'où un gain de place, de masse, et d'économie.

On définit un sens de déplacement privilégié pour le véhicule 2, permettant ainsi de définir des roues avant 2a et des roues arrière 2a.

Selon une première définition, les roues avant 2a permettent de « tracter » le véhicule 2 et les roues arrière de « propulser » le véhicule 2b. Cette définition dépend de la position du centre de gravité du véhicule 2 : en projetant orthogonalement le point de contact roues/sol et le centre de gravité sur un plan, les roues seront dites :
- de traction si leur projection se situe entre l'avant (selon le sens privilégié) et le centre de gravité projeté, et
- de propulsion si elles se situent du côté de l'arrière et le centre de gravité projeté.

Selon une seconde définition, pour un véhicule 2 en marche avant et en montée, les roues avant 2a sont celles qui se trouvent à une altitude plus élevée que les roues arrière 2b.

Dans le cas où le véhicule 2 comprend des roues intermédiaires, selon leur rôle, elles peuvent être considérées comme arrière par rapport aux roues avant 2a ou avant par rapport aux roues arrière 2b.

Dans la configuration telle que représentée sur les figures, le véhicule 2 comprend typiquement quatre roues dont deux roues avant 2a et deux roues arrière 2b, quelle que soit la définition utilisée dans le cas présent. Néanmoins, le dispositif 1 peut être adapté aux autres configurations (six, huit roues...), en fonction du rôle (traction ou propulsion) ou l'altitude de la roue selon les définitions précédemment données.
Les premiers appareils 11 motorisant les roues avant 2a sont alors chacun reliés aux premiers circuits d'alimentation 12 et de retour 13, en parallèle.
Les deuxièmes appareils 21 motorisant les roues arrière 2b sont alors chacun reliés aux deuxièmes circuits d'alimentation 22 et de retour 23, en parallèle.

Le premier appareil 11 motorise la roue avant 2a et le deuxième appareil 12 motorise la roue arrière 2b. Ainsi, le clapet anti-retour 30 est passant dans le sens allant du circuit d'alimentation 12 des roues avant 2a vers le circuit d'alimentation 22 des roues arrière 2b.
La cylindrée du deuxième appareil 21 est supérieure ou égale à celle du premier appareil 11, pour des raisons d'appel de débit qui seront explicitées par la suite.

A présent, l'invention va être décrite lors de mise en situation du dispositif et du véhicule, le circuit hydraulique choisi étant le schéma A.

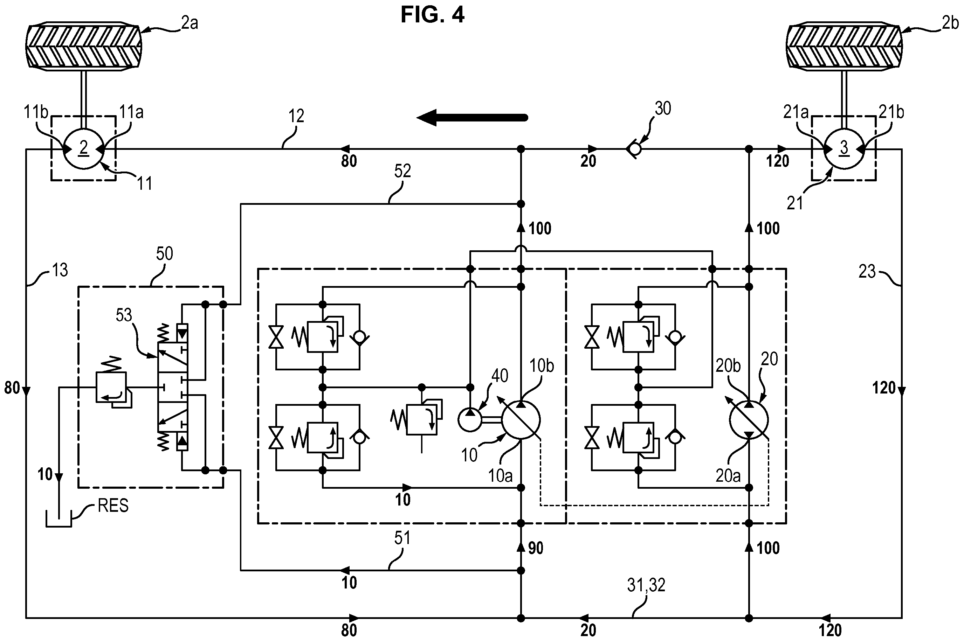

La **figure 4** représente le dispositif 1 lorsque le véhicule 2 est en marche avant (sens de la flèche) et sans glissement ni patinage des roues. Le rapport de cylindrée entre le premier appareil 11 (celui des roues avant 2a) et le deuxième appareil 21 (celui des roues arrière 2b) est ici de 2/3 (cylindrée de deux litres pour le premier appareil 11 et de trois litres pour le deuxième appareil 21). Les valeurs figurant sur la **figure 4** sont des exemples et permettent de calculer aisément les rapports de cylindrée.
De la même façon sont représentés sur le schéma les débits des différents circuits. Ces valeurs sont également des exemples et permettent de calculer aisément les rapports de débit.
Chaque pompe délivre un certain débit (ici 100 L/min). Les cylindrées des appareils 11, 21 n'étant pas les mêmes, les débits d'huile nécessaires ne sont pas les mêmes (les appels de débit se font dans le rapport des cylindrées). Ainsi, une partie du débit (ici 80 L/min) de la première pompe 10 alimente le premier appareil 11 et une autre partie du débit (ici 20 L/min) n'est pas utilisé par le premier appareil 11 et sert donc à alimenter le deuxième appareil 21 pour lequel le débit (ici 100 L/min) de la deuxième pompe 20 n'est pas suffisant pour obtenir la même vitesse de rotation. En effet, une légère surpression est créée dans le premier circuit d'alimentation 12, ce qui permet l'ouverture du clapet anti-retour 30. De cette façon, le dispositif 1 répartit spontanément le débit des deux pompes 10, 20 selon les besoins des appareils sans qu'il soit nécessaire de commander électroniquement ou mécaniquement de vannes.
On comprend désormais pourquoi la cylindrée du premier appareil 11 est inférieure ou égale à celle du deuxième appareil 21 : en effet, le clapet anti-retour 30 n'autorise un transfert d'huile que depuis le premier circuit 11 vers le deuxième circuit d'alimentation 12. Si la cylindrée du premier appareil 11 était supérieure stricte à celle du deuxième appareil 12, une partie du débit de la deuxième pompe 20 devrait être apporté au premier appareil 11, ce que le clapet anti-retour 30 n'autorise pas. Complémentairement, il est préférable que tout le débit reçu par le deuxième appareil 21 ne soit pas fourni uniquement par la deuxième pompe 20 ; c'est pourquoi, à vitesse de rotation déterminée, afin de permettre le mélange des huiles, le débit de la deuxième pompe 20 est préférablement inférieur à l'appel de débit du deuxième appareil 21. Si l'appel de débit ne peut être satisfait par la première pompe 10, alors la vitesse du véhicule 2 diminue.

Au niveau des circuits de retour 13, 23, les deux débits du premier circuit (ici 80 L/min) et du deuxième circuit (ici 120 L/min) se redivisent entre les deux pompes, grâce à la communication fluidique permanente entre les deux circuits de retour 13, 23. De cette façon, chaque pompe 10, 20 reçoit le même débit qu'elle a émis (ici 100 L/min).

La pression dans les circuits d'admission 12, 22 est supérieure à celle dans les circuits de retour 13, 23 (de l'ordre de 400 bars contre 20 bars).

Selon un mode de réalisation, étant donné les valeurs des pressions dans les circuits, le sélecteur 53 sélectionne le circuit de prélèvement principal 51 du bloc d'échange 50 pour prélever un certain débit (ici 10 L/min) entre la jonction 31 des deux circuits de retour 13, 23 et l'orifice d'admission 10b de la pompe 10. Etant donné que le débit dans le premier circuit de retour (ici 80) est plus faible que le débit avant ladite jonction 31 qu'après (ici 100 L/min), on est assuré que le débit de fluide prélevé (ici 10 L/min) comprend de l'huile issue de chaque appareil 11, 21, ce qui contribue à renouveler l'huile de l'intégralité du circuit et pas seulement d'un seul appareil. Ledit débit d'huile prélevé est compensé au niveau du premier circuit de retour 13 par la pompe de gavage 40, de sorte que la première pompe 10 reçoit bien le même débit qu'elle émet (ici 100 L/min).

Alternativement, chaque pompe respective 10, 20 peut fournir le débit exact nécessaire à l'appareil 11, 21 respectif. Il n'y a ainsi pas d'huile de transmise par le clapet anti-retour 30. Néanmoins, un tel mode de réalisation ne favorise pas le mélange d'huile au niveau du circuit de prélèvement principal 51 puisque chaque circuit de retour 13, 23 transmet un débit équivalent à celui émis par les pompes respectives 10, 20.

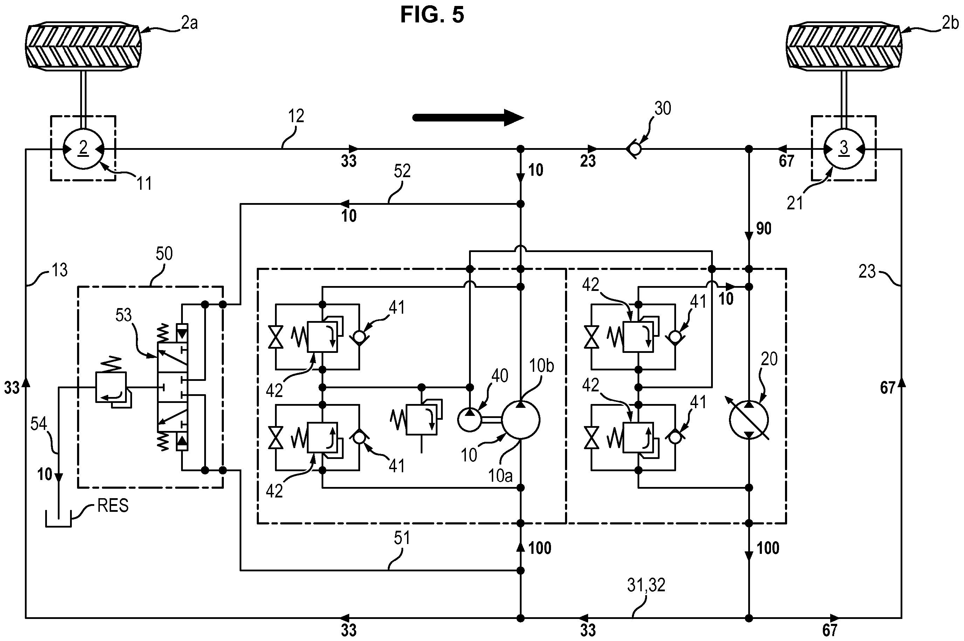

La **figure 5** représente le dispositif 1 lorsque le véhicule 2 est en marche arrière (sens de la flèche) et sans glissement. Le rapport des cylindrées est ici de 2/3 à nouveau. Due à une cylindrée plus importante dans le deuxième appareil 21 que dans le premier appareil 11, seule la deuxième pompe 20 est activée.
Celle-ci délivre un débit (ici 100 L/min) en direction des circuits de retour 13, 23. Par les appels de débit des appareils 11, 21 et la communication fluidique entre les deux circuits de retour 13, 23, le débit de la deuxième pompe 20 se répartit entre lesdits deux circuits (ici 33 L/min pour le premier circuit de retour 13 et 67 L/min pour le deuxième circuit de retour 23).
Le débit du premier circuit de retour 13 se retrouve dans le premier circuit d'alimentation 12 et rejoint ensuite, via le clapet anti-retour 30, le deuxième circuit d'alimentation 22, de sorte que la deuxième pompe 20 récupère bien le débit émis.
Alternativement, la première pompe 10 est aussi activée et fournit un débit adapté au premier appareil 11, c'est-à-dire que l'intégralité dudit débit est absorbé par ledit appareil 11 (pour cela, le ratio du débit fourni par le première pompe 10 sur la deuxième pompe 20 est par exemple égal audit ratio des cylindrées).

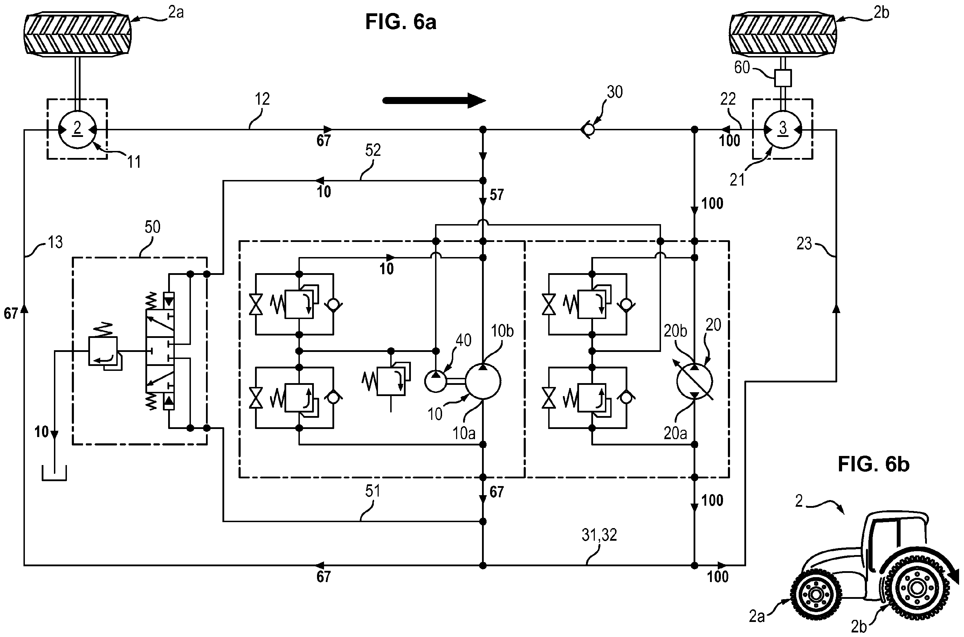

La **figure 6a** représente le dispositif 1 lorsque le véhicule 2 est en marche arrière (sens de la flèche) et avec glissement des roues arrières (voir **figure 6b****)**. Le rapport des cylindrées est ici de 2/3 à nouveau. Outre la deuxième pompe 20, la première pompe 10 est cette fois-ci activée et fournit un débit adapté au premier appareil 11, c'est-à-dire que l'intégralité dudit débit est absorbé par ledit appareil 11 (pour cela, le ratio du débit fourni par le première pompe 10 sur la deuxième pompe 20 est par exemple égal au dit ratio des cylindrées, modulo le débit prélevé par le bloc d'échange 50).

Une telle activation de la première pompe 10 permet avantageusement de lutter contre un glissement des roues arrière 2b en marche arrière. En effet, dans un tel véhicule 2, lorsque les roues patinent, elles créent une « aspiration » de débit, c'est-à-dire que l'huile a tendance à se diriger vers l'appareil motorisant les roues qui patinent, c'est-à-dire l'appareil qui subit une perte de charge.
Dans le cas présent, si les roues arrière 2b patinent, la pression dans les circuits de retour 13, 23 chute (typiquement 100 bars contre 400 bars hors patinage) et le deuxième appareil 21 créé un appel de débit. Comme la deuxième pompe 20 ne peut absorber un débit supérieur à ce qu'elle délivre, l'appel de débit qui ne peut être satisfait va provoquer une augmentation de la pression dans le deuxième circuit d'alimentation 22 et de cette façon, l'écart de pression autour du deuxième appareil 21 se réduit. Ainsi, le couple fourni à l'arrière diminue, permettant de limiter ou stopper le glissement des roues arrière 2b. Le premier appareil 11, toujours alimenté par la première pompe 10, permet de garder de la motricité.

Selon un mode de réalisation, étant donné que la pression est plus importante dans le circuit de retour 13 que dans le circuit d'alimentation 12 (on rappelle que les appareils 11, 21 fonctionnent en marche arrière), le circuit de prélèvement secondaire 52 prélève une partie du débit du premier circuit d'alimentation 12 (ici 10 L/min) pour l'envoyer vers le bloc d'échange 50. La pompe de gavage 40 compense ce prélèvement au niveau du refoulement 10b de la première pompe (on rappelle que le véhicule est en marche arrière dans ce cas de figure).

Alternativement, si les deux appareils 11, 21 ont des cylindrées égales, les deux pompes 10, 20 peuvent être activées en délivrant un même débit. De cette façon, chaque appel de débit des deux appareils 11, 21 étant le même, il n'y aura pas d'échange d'huile au niveau du clapet anti-retour 30.

Avec le schéma A, cela ne contribue pas au mélange d'huile permettant de renouveler l'huile du dispositif avec un seul bloc d'échange 50. En revanche, avec les schémas B et C, le mélange d'huile se fait.

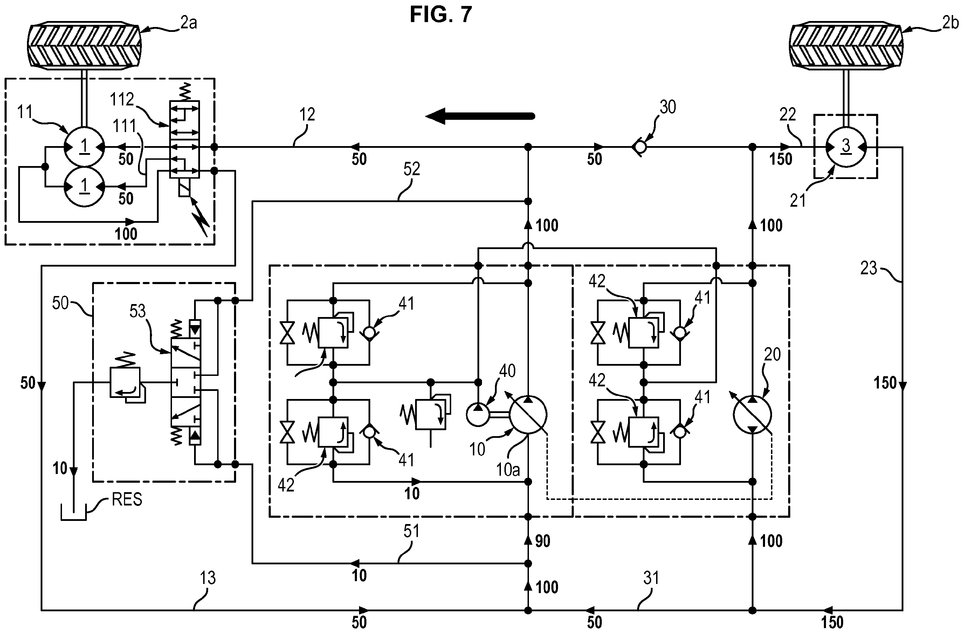

La **figure 7** représente le dispositif 1 lorsque le véhicule est en marche avant (sens de la flèche) en condition de transfert (vitesse élevée) avec un premier appareil 11 à cylindrées variable (de rapport (1+1)/3 comparativement à la cylindrée du deuxième appareil 21).
En condition de transfert, seule la première cylindrée du premier appareil 11 est activée, de sorte que le rapport de cylindrée est en fait de 1/3. Les deux pompes 10, 20 sont activées et délivrent un même débit (ici 100 L/min). Le principe de la répartition de débit est similaire à celui de la **figure 3****.**
Du fait du rapport de cylindrée de 1/3, une partie du débit de la première pompe 20 (ici 50 L/min) est redirigée vers le deuxième appareil 21 (qui reçoit ici un débit de 100+50 L/min) via le clapet anti-retour 30.
La répartition se refait automatiquement au niveau des circuits de retour 13, 23. On retrouve aussi préférablement le prélèvement de débit pour le bloc d'échange 50, similairement à la configuration de la **figure 5****.**

Au niveau du premier appareil 11, on remarque un circuit annexe 111 et un sélecteur 112. Ledit sélecteur permet de faire changer la cylindrée dudit appareil (ici de 1L à 1+1=2L) selon l'utilisation, en alimentant depuis le premier circuit d'alimentation 12 soit :
- seulement une seule cylindrée (voir **figure 7**), dans ce cas l'autre cylindrée est alimentée depuis le premier circuit de retour 13 via ledit sélecteur 112 et le circuit annexe 111, de façon à permettre la rotation dudit appareil ;
- les deux cylindrées, dans ce cas l'architecture des circuits est similaire à celle d'un appareil ayant une unique cylindrée.

Le prélèvement d'huile pour le bloc d'échange 50 se fait par le circuit de prélèvement principal 51 et le débit d'huile prélevé est compensé par la pompe de gavage 40 au niveau du premier circuit de retour 13 (similairement au mode de réalisation de la **figure 3****).**

Dans cette mise en situation, la pression dans les circuits d'admission 12, 22 est supérieure à celle dans les circuits de retour 13, 23 (de l'ordre de 400 bars maximum contre 20 bars).

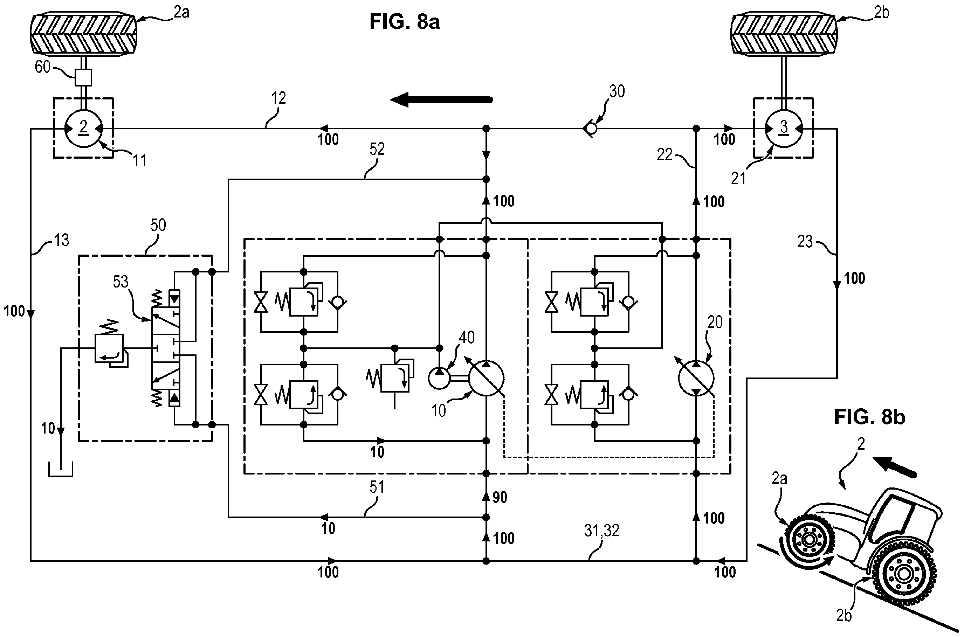

La **figure 8a** représente le dispositif 1 lorsque le véhicule 2 est en marche avant (sens de la flèche) avec un patinage des roues avant 2a (voir **figure 8b****)**. Le rapport des cylindrées est toujours de 2/3, avec une cylindrée plus important à l'arrière (ici 3L) qu'à l'avant (ici 2L).
Comme mentionné précédemment, lorsque les roues patinent, l'appareil subit une perte de charge et crée une « aspiration » de débit, c'est-à-dire que l'huile a tendance à se diriger vers l'appareil motorisant les roues qui patinent.
L'exemple figurant sur la **figure 8a** permet d'illustrer un des avantages de l'invention.
Chaque pompe 10, 20 fournit ici le même débit (100 L/min). Dans le cas précédent, dû à l'appel de débit du deuxième appareil 21, le clapet anti-retour 30 permet un passage du débit du premier circuit d'alimentation 12 vers le deuxième circuit d'alimentation 22. En cas de patinage des roues avant 2a, comme le premier appareil 11 subit une perte de charge et que la pression dans le premier circuit d'alimentation 12 chute, ledit appareil 11 va capter tout le débit de la première pompe 10 (ici 100L/min) mais pas celui de la deuxième pompe 20, du fait de la présence du clapet anti-retour 30. De cette façon, le deuxième appareil 21 est toujours alimenté en huile sous pression (ici 100 L/min) et les roues arrière 2b conservent leur motricité.
On notera que la vitesse de rotation dudit appareil 21 est réduite du fait de la baisse de débit (ici 20L/min différence par rapport à une absence de patinage), ladite baisse étant due au premier appareil 11 qui capte tout le débit de la première pompe 10.
En cas de patinage, le clapet anti-retour 30 permet de séparer les circuits d'alimentation 12, 22 afin d'assurer une motricité des roues arrières 2b.
Alternativement, dès qu'un glissement est détecté, le débit de la deuxième pompe 20 est ajusté pour fournir l'intégralité du débit appelé par le deuxième appareil 21 (ici 120 L/min) et le débit de la première pompe 10 est ajusté au débit du premier appareil 11 (ici 80 L/min). De cette façon, le véhicule 2 ne subit pas de ralentissement.
Lors de ce fonctionnement, et avec le schéma A, il n'y a quasiment pas de mélange d'huile au niveau des circuits de retour 13, 23, dû au débit équivalent dans chacun des circuits 13, 23. Néanmoins, le patinage n'étant qu'un état transitoire, cela ne constitue pas un désavantage nécessitant d'être résolu. Avec les autres schémas B et C, le mélange se fait.
Le prélèvement d'huile pour le bloc d'échange 50 se fait par le circuit de prélèvement principal 51 et le débit d'huile prélevé est compensé par la pompe de gavage 40 au niveau du premier circuit de retour 13 (similairement au mode de réalisation des **figures 3****,** **6**).

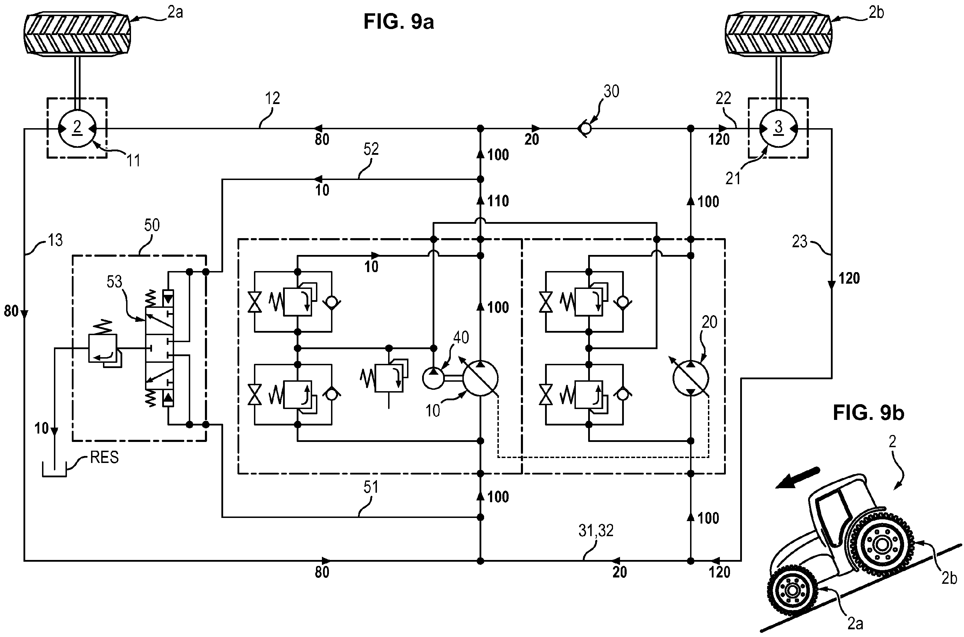

La **figure 9a** représente le dispositif 1 lorsque le véhicule 2 est en marche avant (sens de la flèche) en retenue dans une descente (voir **figure 9b**) sans patinage. Le rapport des cylindrées est toujours de 2/3, avec une cylindrée plus important à l'arrière (ici 3L) qu'à l'avant (ici 2L). Dans cette configuration, les appareils 11, 21 fonctionnent en pompe et les pompes 10, 20 fonctionnent en moteur.
En effet, les pompes 10, 20 débitent un certain débit (ici 100 L/min pour les deux) qui se répartit à nouveau de façon similaire entre le premier circuit d'alimentation 12 (ici 80 L/min) et le deuxième circuit d'alimentation 22 (ici 120 L/min), via le clapet anti-retour 30. En revanche, la pression dans les circuits de retour 13, 23 est supérieure (haute pression) à celle (basse pression) des circuits d'alimentation 12, 22 (de l'ordre de 400 bars contre 20 bars) car le véhicule 2 est retenu dans la descente. Plus précisément, la pression dans les circuits de retour 13, 23 est déterminée par la charge du véhicule 2 (qui dépend de sa masse, de la pente, etc.).

L'huile reçue au niveau des orifices d'admission 11a, 21a est donc « pompée » par les appareils 11, 21 qui montent l'huile en pression. De cette façon, les appareils 11, 21 présentent un couple négatif (ou résistant) qui permet de freiner le véhicule 2 (les roues tournent toujours dans le sens de la marche avant). Les pompes 10, 20 reçoivent de l'huile sous haute pression, ce qui fait fonctionner les pompes 10, 20 en moteur, qui répercutent le couple sur l'alimentation des pompes, donc typiquement sur le moteur thermique, qui utilise alors le frein moteur pour freiner le véhicule.
La chaîne de transmission de couple s'effectue donc des roues avant 2a et arrière 2b vers les appareils 11, 21, puis les pompes 10, 20 et le frein moteur du moteur thermique.
Alternativement, la mise sous haute pression effectuée par les appareils 11, 21 peut être utilisées pour charger des réservoirs d'huile sous haute pression afin de disposer de réserves pour apport de puissance ponctuel (domaine de l'hybridation et récupération d'énergie), notamment sur d'autres fonctions du véhicule (outils, etc.).

Dans cette configuration, l'huile destinée au bloc d'échange 50 est prélevée au niveau du premier circuit d'alimentation 12 par le circuit secondaire de prélèvement 52, où la pression est la plus faible (basse pression) et la pompe de gavage 40 réalimente au niveau du premier circuit d'alimentation 12 aussi.

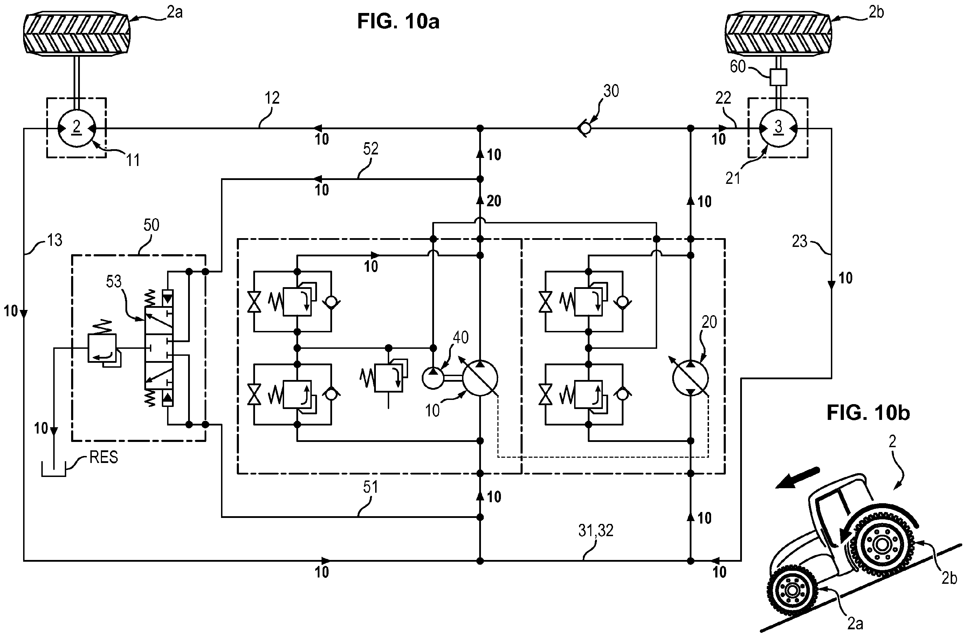

La **figure 10a** représente le dispositif 1 lorsque le véhicule 2 est en marche avant (sens de la flèche) en retenue dans une descente (voir **figure 10b**) et que les roues arrière 2b se bloquent. Le rapport des cylindrées est toujours de 2/3, avec une cylindrée plus importante à l'arrière (ici 3L) qu'à l'avant (ici 2L).
Dans cette configuration toujours, les appareils 11, 21 fonctionnent en pompe et les pompes 10, 20 fonctionnent en moteur.

Dans l'état de l'art, si le couple négatif (ou résistant) au niveau du deuxième appareil 21 provoque un blocage des roues arrières 2b, la retenue est brusquement réduite, ce qui peut provoquer la perte de contrôle du véhicule 2.
Grâce l'invention, l'on est prémuni contre cette conséquence.
En effet, lorsque la roue arrière 2b ralentit ou se bloque, la pression dans le deuxième circuit d'alimentation 22 va augmenter, le clapet anti-retour 30 empêchant l'huile d'être redirigée vers le premier circuit d'alimentation 12. Comme la pression monte dans le deuxième circuit d'alimentation 22 et que la pression dans le deuxième circuit de retour 23 est toujours déterminée par la charge, la différence de pression autour du deuxième appareil 21 diminue, ce qui fait diminuer le couple négatif (ou résistant) et les roues 2b se débloquent et recommencent à rouler.
En contrepartie, comme la pression dans le deuxième circuit d'alimentation 22 a augmenté, il n'y plus de transfert de débit d'huile du premier circuit d'alimentation 12 vers le deuxième 22, ce qui augmente le débit alimentant le premier appareil 11 (ici un débit de 100 L/min). De cette façon, la vitesse du véhicule va augmenter mais en gardant toujours la motricité des quatre roues. Le clapet anti-retour 30 permet dans cette configuration de séparer les deux circuits d'alimentation 12, 22.
Dans cette configuration, l'huile destinée au bloc d'échange 50 est prélevée au niveau du premier circuit d'alimentation 12 par le circuit secondaire de prélèvement 52, où la pression est la plus faible (basse pression) et la pompe de gavage 40 réalimente au niveau du premier circuit d'alimentation 12 aussi (similairement aux modes de réalisation des figures 8a.

L'utilisation du clapet anti-retour 30 permet ainsi de limiter le patinage des roues situées à la plus haute altitude.
En outre, la jonction 31 des circuits de retour 13, 23 permet un mélange de l'huile et ainsi de n'avoir qu'un seul bloc d'échange 50 pour prélever et recycler l'huile.

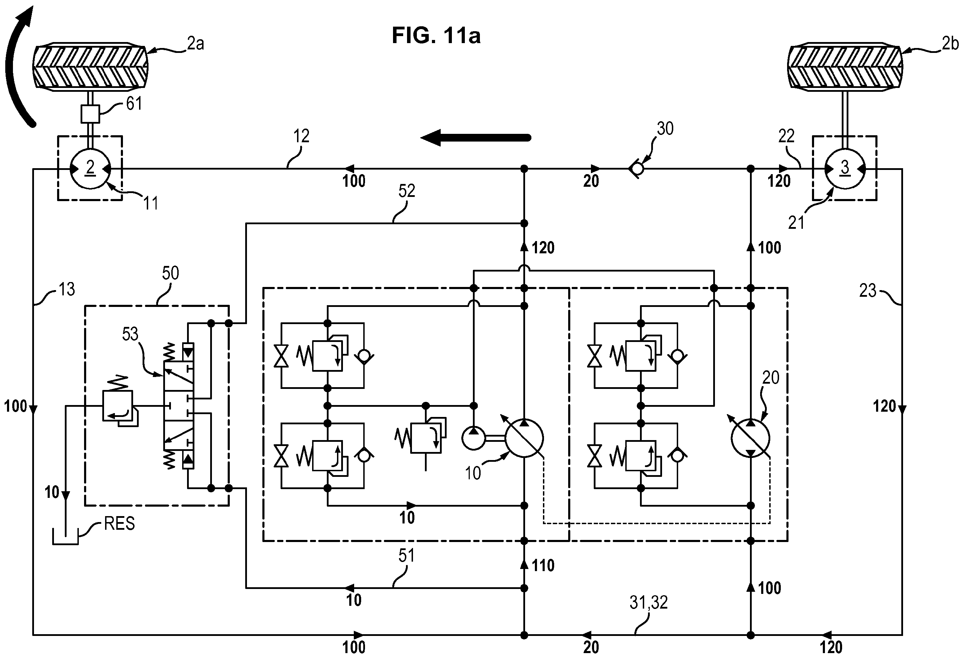

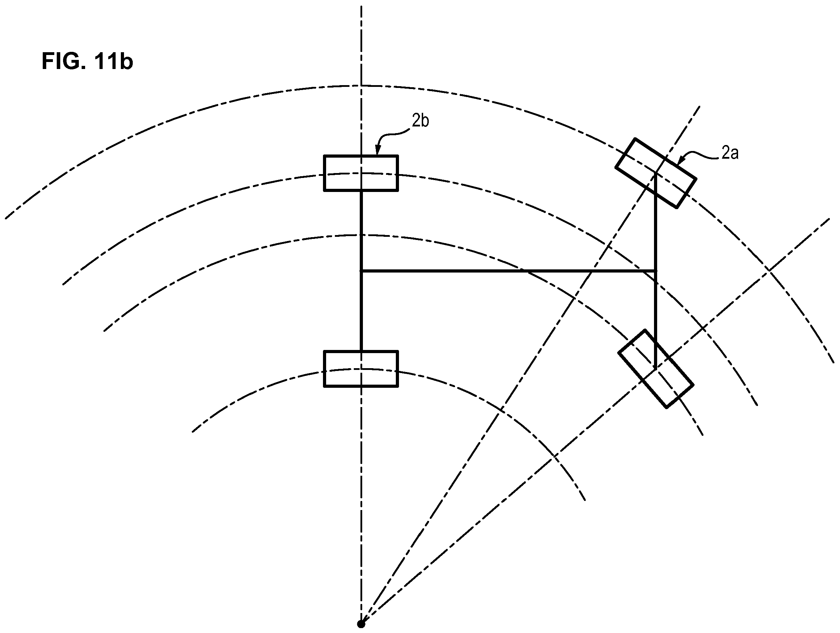

La **figure 11a** représente le dispositif 1 lorsque le véhicule 2 est en marche avant (sens de la flèche) et en virage, les roues avant 2a étant directrices. Les roues avant 2a parcourt une distance plus importante que les roues arrière 2b (voir **figure 11b**). L'appel de débit du premier appareil 11 est plus important qu'en ligne droite.
Deux possibilités sont envisageables :
- le débit de la première pompe 10 est augmenté pour pouvoir satisfaire à la fois le débit appelé par le premier et le deuxième appareils 11, 21. Le débit de la deuxième pompe 20 est inchangé.
- Les débits des deux pompes 10, 20 sont augmentés pour pouvoir satisfaire les deux appels de débit des appareils 11, 21.

En cas de patinage pendant le virage, le contrôle du patinage de fera de la même façon, avec l'essieu arrière pouvant fonctionner à pression élevée même en cas de perte d'adhérence de l'essieu avant. Il s'agit d'un cas particulier, mais il apparaît assez rapidement dans les situations de virage sur un véhicule en roues avant 2a directrices par exemple. Dans ce cas, les appareils 11 avant montés sur les roues directrices 2a, appellent un débit qui peut être supérieur au débit nécessaire aux roues arrière 2b.

Au vu des caractéristiques de l'invention, il est possible d'installer une première pompe 10 plus économique que la deuxième pompe 20, c'est-à-dire possédant une puissance moindre. En effet, lors de patinage de l'avant, le clapet anti-retour 30 empêche la communication d'huile, ce qui signifie que seule la deuxième pompe 20 offre de la motricité au véhicule 2 *via* les roues arrière 2b. En pratique, il est effectivement possible d'utiliser une deuxième pompe 20 ayant un tarage maximal supérieur sur le second circuit d'alimentation 22 que sur le premier circuit d'alimentation 21 avant pour ce qui est de la pression en marche avant.
Par exemple, la deuxième pompe 20 est du type « heavy duty » (plus de 100 cm³), pouvant fournir une pression de 500 bars et la première pompe 10 est du type « médium duty » (environ 70 cm³) pouvant fournir une pression de 350 bars (de telles cylindrées permettent d'assurer les débits générés dans les appareils 11, 21 de cylindrées respectivement deux et trois litres). Cela permet des économies de place, de masse et de coûts notamment.
Alternativement ou complémentairement, les pompes 10, 20 peuvent être à commande électrique proportionnelle, permettant d'apporter le débit strict minimum à chaque appareil 11, 21, ainsi qu'il l'a été expliqué dans certaines mises en situation auparavant. Par exemple, apporter exactement l'appel de débit permet entre autres de limiter le patinage et aussi la survitesse lors d'un patinage des roues avant 2a en montée (voir **figures 6a, 6b**) puisque le débit est limité au nécessaire (dû à l'écart de cylindrée, on rappelle qu'un même débit provoque des vitesses de rotations différentes) ou par exemple lors d'une descente en retenue (voir **figures 7a, 7b**)**.** La deuxième pompe 20 a ainsi préférablement un débit maximal égal ou inférieur au débit maximal admissible dans le deuxième appareil 21.

La détection du patinage ou du glissement des roues peut se faire à l'aide d'un capteur de patinage 60.
La mesure du virage peut se faire à l'un d'un capteur de virage 61.
Le réglage des pompes à commande électrique proportionnelle peut être effectué par une unité de calcul 62, recevant des données issues des capteurs 60, 61.

## Revendications

1. Dispositif (1) de transmission hydrostatique pour véhicule, ledit dispositif comprenant :
- Une première pompe (10) et une deuxième pompe (20), chaque pompe (10, 20) comprenant une admission (10a, 20a) et un refoulement (10b, 20b),
- Un premier appareil hydraulique (11) et un deuxième appareil hydraulique (21), chaque appareil (11, 21) comprenant une admission (11a, 21a) et un refoulement (11b, 21b),
- Un premier circuit d'alimentation (12) reliant le refoulement (10b) de la première pompe (10) à l'admission (11a) du premier appareil (11) et,
- Un deuxième circuit d'alimentation (22) reliant le refoulement (20b) de la deuxième pompe (20) à l'admission (12a) du deuxième appareil (21) et
**caractérisé en ce que** le dispositif comprend en outre:
- un clapet anti-retour (30) entre les circuits d'alimentation (12, 22), le clapet (30) ayant un sens passant du premier (12) vers le deuxième circuit d'alimentation (22),
- un premier circuit de retour (13) reliant le refoulement (11b) du premier appareil (10) aux admissions (10b, 20b) desdites pompes (10, 20),
- un deuxième circuit de retour (23) reliant le refoulement du deuxième appareil (20) aux admissions (10b, 20b) desdites pompes (10,20),
de sorte que les circuits de retour (13, 23) sont en communication fluidique permanente entre eux par une jonction (31).

2. Dispositif selon la revendication 1, dans lequel le premier circuit de retour (13) est relié à l'admission (10b) de la première pompe (10) et le second circuit de retour (23) est relié à l'admission (20b) de la deuxième pompe (20), les deux circuits de retour (13, 23) étant reliés entre eux par un circuit de communication (32).

3. Dispositif selon la revendication 1, dans lequel le premier circuit de retour (13) est relié à l'admission (20b) de la deuxième pompe (20) et le second circuit de retour (23) est relié à l'admission (10b) de la première pompe (10), les deux circuits de retour (13, 23) étant reliés entre eux par un circuit de communication (32).

4. Dispositif selon la revendication précédente, dans lequel le deuxième appareil (21) possède une cylindrée plus importante que le premier appareil (11).

5. Dispositif selon l'une des revendications précédentes, comprenant en outre un bloc d'échange (50) apte à prélever de l'huile pour son traitement, ledit bloc d'échange comprenant un circuit de prélèvement principal (51) prélevant le fluide entre :
- la jonction (31) des circuits de retour (13, 23) et
- l'admission (10a) de la première pompe (10),
de sorte que le bloc d'échange peut prélever de l'huile issue à la fois du premier (11) et du deuxième appareil (21).

6. Dispositif selon la revendication précédente, dans lequel le bloc d'échange (50) comprend en outre un circuit de prélèvement secondaire (52) prélevant le fluide entre :
- l'admission (11a) du premier appareil (11) et
- le refoulement (11b) de la première pompe (10),
les deux circuits de prélèvements (51, 52) étant reliés au niveau d'un sélecteur (53) apte à fermer les deux circuits (51, 52) ou à relier l'un des deux circuit (51, 52) à un circuit de drainage (54) en fermant l'autre (52, 51).

7. Dispositif selon l'une des revendications précédentes, dans lequel les pompes (10, 20) sont des pompes à commande électrique proportionnelle, la deuxième pompe (20) ayant un débit maximal inférieur ou égal au débit maximal admissible dans le deuxième appareil (21).

8. Dispositif selon l'une des revendications précédentes, dans lequel, pour une vitesse de rotation des appareils (10, 20) déterminée, le débit de la deuxième pompe (20) est inférieur à l'appel de débit du deuxième appareil (21) nécessaire, et le débit de la première pompe (10) est supérieur à l'appel de débit du premier appareil (11), de sorte que la première pompe (10) est apte à compléter l'appel de débit du deuxième appareil *via* le clapet anti-retour (30).

9. Véhicule (2) comprenant un dispositif (1) selon l'une des revendications précédentes, possédant un sens de déplacement privilégié définissant des roues avant (2a) et arrière (2b), dans lequel le premier appareil hydraulique (11) motorise au moins une roue avant (2a) et le deuxième appareil hydraulique (21) motorise une roue arrière (2b).

10. Procédé d'utilisation d'un véhicule (2) selon la revendication précédente, **caractérisé en ce que** ledit véhicule a un deuxième appareil (21) de cylindrée supérieure au premier appareil (11), et **en ce que** ledit procédé comprend une étape durant laquelle :
- le clapet anti-retour (30) envoie un débit d'huile issu de la première pompe (10) vers le deuxième appareil (12).

11. Procédé selon la revendication précédente, comprenant une séquence d'étapes dans lesquelles le clapet anti-retour (30) passe d'un état passant à un état bloquant lorsque :
- Les roues avant (2a) commencent à patiner lors d'une marche avant,
- Les roues arrière (2b) se bloquent lors d'une retenue en marche avant.

12. Procédé selon l'une des revendications 10 ou 11, comprenant une séquence d'étapes dans lesquelles le clapet anti-retour (30) passe d'un état bloquant à un état passant lorsque :
- Les roues avant (2a) arrêtent de patiner lors d'une marche avant,
- Les roues arrière (2b) se débloquent lors d'une retenue en marche avant.

13. Procédé selon les revendications 7 et 9, dans lequel le véhicule (2) est en marche arrière, comprenant les étapes de :
- Détection d'un glissement d'une roue arrière (2b),
- Ajustement du débit de la première pompe (10) pour fournir au plus le débit appelé par le premier appareil (11, 21).

14. Procédé selon les revendications 7 et 9, dans lequel le véhicule (2) est en marche avant, comprenant les étapes de :
- Détection d'un glissement d'une roue avant (2a),
- Ajustement du débit de la deuxième pompe (20) pour fournir l'intégralité du débit appelé par le deuxième appareil (21).

15. Procédé selon les revendications 8 et 9, dans lequel les roues avant du véhicule (2) sont des roues directrices, comprenant les étapes de :
- Détection d'un virage effectué par le véhicule (2),
- Ajustement du débit des première et deuxième pompe (10, 20) pour fournir l'intégralité des débits appelés respectivement par le premier appareil (11) et le deuxième appareil (21).

## Patentansprüche

1. Vorrichtung (1) für hydrostatische Übertragung für ein Fahrzeug, wobei die Vorrichtung umfasst:
- eine erste Pumpe (10) und eine zweite Pumpe (20), wobei jede Pumpe (10, 20) einen Einlass (10a, 20a) und einen Auslass (10b, 20b) umfasst,
- ein erstes hydraulisches Gerät (11) und ein zweites hydraulisches Gerät (21), wobei jedes Gerät (11, 21) einen Einlass (11a, 21a) und einen Auslass (11b, 21b) umfasst,
- einen ersten Versorgungskreis (12), der den Auslass (10b) der ersten Pumpe (10) mit dem Einlass (11a) des ersten Geräts (11) verbindet, und
- einen zweiten Versorgungskreis (22), der den Auslass (20b) der zweiten Pumpe (20) mit dem Einlass (12a) des zweiten Geräts (21) verbindet, und
**dadurch gekennzeichnet, dass** die Vorrichtung ferner umfasst:
- ein Rückschlagventil (30) zwischen den Versorgungskreisen (12, 22), wobei das Ventil (30) eine Durchgangsrichtung vom ersten (12) zum zweiten Versorgungskreis (22) hat,
- einen ersten Rückströmkreis (13), welcher den Auslass (11b) des ersten Geräts (10) mit den Einlässen (10b, 20b) der Pumpen (10, 20) verbindet,
- einen zweiten Rückströmkreis (23), welcher den Auslass des zweiten Geräts (20) mit den Einlässen (10b, 20b) der Pumpen (10, 20) verbindet,
so dass die Rückströmkreise (13, 23) durch eine Verbindung (31) in ständiger Fluidkommunikation untereinander sind.

2. Vorrichtung nach Anspruch 1, wobei der erste Rückströmkreis (13) mit dem Einlass (10b) der ersten Pumpe (10) verbunden ist und der zweite Rückströmkreis (23) mit dem Einlass (20b) der zweiten Pumpe (20) verbunden ist, wobei die zwei Rückströmkreise (13, 23) durch einen Kommunikationskreis (32) untereinander verbunden sind.

3. Vorrichtung nach Anspruch 1, wobei der erste Rückströmkreis (13) mit dem Einlass (20b) der zweiten Pumpe (20) verbunden ist und der zweite Rückströmkreis (23) mit dem Einlass (10b) der ersten Pumpe (10) verbunden ist, wobei die zwei Rückströmkreise (13, 23) durch einen Kommunikationskreis (32) untereinander verbunden sind.

4. Vorrichtung nach vorangehendem Anspruch, wobei das zweite Gerät (21) einen größeren Hubraum als das erste Gerät (11) besitzt.

5. Vorrichtung nach einem der vorangehenden Ansprüche, umfassend ferner einen Tauscherblock (50), der imstande ist, Öl für seine Bearbeitung zu entnehmen, wobei der Tauscherblock einen Hauptentnahmekreis (51) umfasst, der Fluid entnimmt zwischen:
- der Verbindung (31) der Rückströmkreise (13, 23) und
- dem Einlass (10a) der ersten Pumpe (10),
so dass der Tauscherblock Öl entnehmen kann, welches sowohl aus dem ersten (11) als auch aus dem zweiten Gerät (21) stammt.

6. Vorrichtung nach vorangehendem Anspruch, wobei der Tauscherblock (50) ferner einen sekundären Entnahmekreis (52) umfasst, der Fluid entnimmt zwischen:
- dem Einlass (11a) des ersten Geräts (11) und
- dem Auslass (11b) der ersten Pumpe (10),
wobei die zwei Entnahmekreise (51, 52) im Bereich eines Wahlschalters (53) verbunden sind, der imstande ist, die beiden Kreise (51, 52) zu schließen oder einen der beiden Kreise (51, 52) mit einem Drainagekreis (54) durch Schließen des anderen (52, 51) zu verbinden.

7. Vorrichtung nach einem der vorangehenden Ansprüche, wobei die Pumpen (10, 20) Pumpen mit proportionaler elektrischer Steuerung sind, wobei die zweite Pumpe (20) einen maximalen Durchfluss hat, der unter oder gleich dem im zweiten Gerät (21) maximal zulässigen Durchfluss liegt.

8. Vorrichtung nach einem der vorangehenden Ansprüche, wobei für eine bestimmte Rotationsgeschwindigkeit der Geräte (10, 20) der Durchfluss der zweiten Pumpe (20) kleiner als der notwendige Durchflussabruf des zweiten Geräts (21) ist und der Durchfluss der ersten Pumpe (10) größer als der Durchflussabruf des ersten Geräts (11) ist, so dass die erste Pumpe (10) imstande ist, den Durchflussabruf des zweiten Geräts über das Rückschlagventil (30) zu ergänzen.

9. Fahrzeug (2), umfassend eine Vorrichtung (1) nach einem der vorangehenden Ansprüche, das eine definierende bevorzugte Verlagerungsrichtung der Vorder- (2a) und Hinterräder (2b) besitzt, wobei das erste hydraulische Gerät (11) mindestens ein Vorderrad (2a) motorisiert und das zweite hydraulische Gerät (21) ein Hinterrad (2b) motorisiert.

10. Verfahren für die Verwendung eines Fahrzeugs (2) nach vorangehendem Anspruch, **dadurch gekennzeichnet, dass** das Fahrzeug ein zweites Gerät (21) mit einem größeren Hubraum als das erste Gerät (11) hat, und dass das Verfahren einen Schritt umfasst, bei dem:
- das Rückschlagventil (30) einen Öldurchfluss von der ersten Pumpe (10) zum zweiten Gerät (12) schickt.

11. Verfahren nach vorangehendem Anspruch, umfassend eine Sequenz von Schritten, bei denen das Rückschlagventil (30) von einem Durchgangszustand in einen Blockadezustand wechselt, wenn:
- die Vorderräder (2a) bei einem Vorwärtsgang beginnen durchzudrehen,
- die Hinterräder (2b) bei einer Verlangsamung im Vorwärtsgang blockieren.

12. Verfahren nach einem der Ansprüche 10 oder 11, umfassend eine Sequenz von Schritten, bei denen das Rückschlagventil (30) von einem Blockadezustand in einen Durchgangszustand wechselt, wenn:
- die Vorderräder (2a) bei einem Vorwärtsgang nicht mehr durchdrehen,
- sich die Hinterräder (2b) bei einer Verlangsamung im Vorwärtsgang lösen.

13. Verfahren nach den Ansprüchen 7 und 9, wobei das Fahrzeug (2) im Rückwärtsgang ist, umfassend die Schritte:
- Detektion eines Rutschens eines Hinterrads (2b),
- Korrektur des Durchflusses der ersten Pumpe (10), um höchstens den Durchfluss bereitzustellen, der vom ersten Gerät (11, 21) abgerufen wird.

14. Verfahren nach den Ansprüchen 7 und 9, wobei das Fahrzeug (2) im Vorwärtsgang ist, umfassend die Schritte:
- Detektion eines Rutschens eines Vorderrads (2a),
- Korrektur des Durchflusses der zweiten Pumpe (20), um den vollen Durchfluss bereitzustellen, der vom zweiten Gerät (21) abgerufen wird.

15. Verfahren nach den Ansprüchen 8 und 9, wobei die Vorderräder des Fahrzeugs (2) lenkende Räder sind, umfassend die Schritte:
- Detektion einer vom Fahrzeug (2) durchgeführten Kurve,
- Korrektur des Durchflusses der ersten und zweite Pumpe (10, 20), um die vollen Durchflüsse bereitzustellen, die jeweils vom ersten Gerät (11) und zweiten Gerät (21) abgerufen werden.

## Claims

1. A hydrostatic transmission device (1) for a vehicle, said device comprising:
- a first pump (10) and a second pump (20), each pump (10, 20) comprising an admission (10a, 20a) and a discharge (10b, 20b),
- a first hydraulic apparatus (11) and a second hydraulic apparatus (21), each apparatus (11, 21) comprising an admission (11a, 21a) and a discharge (11b, 21b),
- a first supply circuit (12) connecting the discharge (10b) of the first pump (10) to the admission (11a) of the first apparatus (11) and,
- a second supply circuit (22) connecting the discharge (20b) of the second pump (20) to the admission (12a) of the second apparatus (21) and
**characterized in that** the device further comprises:
- a non-return valve (30) between the supply circuits (12, 22), the valve (30) having a direction for passing from the first (12) to the second supply circuit (22),
- a first return circuit (13) connecting the discharge (11b) of the first apparatus (10) to the admissions (10b, 20b) of said pumps (10, 20),
- a second return circuit (23) connecting the discharge of the second apparatus (20) to the admissions (10b, 20b) of said pumps (10, 20),
so that the return circuits (13, 23) are in permanent fluidic communication with each other through a junction (31).

2. The device according to claim 1, wherein the first return circuit (13) is connected to the admission (10b) of the first pump (10) and the second return circuit (23) is connected to the admission (20b) of the second pump (20), both return circuits (13, 23) being connected together through a communication circuit (32) .

3. The device according to claim 1, wherein the first return circuit (13) is connected to the admission (20b) of the second pump (20) and the second return circuit (23) is connected to the admission (10b) of the first pump (10), both return circuits (13, 23) being connected together through a communication circuit (32) .

4. The device according to the preceding claim, wherein the second apparatus (21) has a larger cylinder capacity than the first apparatus (11).

5. The device according to one of the preceding claims, further comprising an exchange block (50) able to sample oil for its treatment, said exchange block comprising a main sampling circuit (51) sampling the fluid between:
- the junction (31) of the return circuits (13, 23) and
- the admission (10a) of the first pump (10),
so that the exchange block may sample oil both from the first (11) and from the second apparatus (21).

6. The device according to the preceding claim, wherein the exchange block (50) further comprises a secondary sampling circuit (52) sampling fluid between:
- the admission (11a) of the first apparatus (11) and
- the discharge (11b) of the first pump (10),
both sampling circuits (51, 52) being connected at a selector (53) able to close both circuits (51, 52) or to connect one of the two circuits (51, 52) to a draining circuit (54) while closing the other (52, 51).

7. The device according to one of the preceding claims, wherein the pumps (10, 20) are pumps with proportional electric control, the second pump (20) having a maximum flow rate of less than or equal to the maximum admissible flow rate in the second apparatus (21) .

8. The device according to one of the preceding claims, wherein for a determined speed of rotation of the apparatuses (10, 20), the flow rate of the second pump (20) is less than the required flow call of the second apparatus (21), and the flow rate of the first pump (10) is greater than the flow call of the first apparatus (11), so that the first pump (10) is able to complete the flow call of the second apparatus via the non-return valve (30).

9. A vehicle (2) comprising a device (1) according to one of the preceding claims, having a preferential displacement direction defining front (2a) and rear (2b) wheels, wherein the first hydraulic apparatus (11) powers at least one front wheel (2a) and the second hydraulic apparatus (21) powers a rear wheel (2b).

10. A method for using a vehicle (2) according to the preceding claim, **characterized in that** said vehicle has a second apparatus (21) with a cylinder capacity greater than the first apparatus (11), and **in that** said method comprises a step during which:
- the non-return valve (30) sends a flow of oil from the first pump (10) to the second apparatus (12).

11. The method according to the preceding claim, comprising a sequence of steps in which the non-return valve (30) passes from a passage condition to a blocking condition when:
- the front wheels (2a) begin to skid upon forward motion,
- the rear wheels (2b) are blocked upon retention during forward motion.

12. The method according to one of claim 10 or 11, comprising a sequence of steps in which the non-return valve (30) passes from a blocking condition to a passage condition when:
- the front wheels (2a) stop skidding upon forward motion,
- the rear wheels (2b) are unblocked upon retention during forward motion.

13. The method according to claims 7 and 9, wherein the vehicle (2) is in backward motion, comprising the steps of:
- detecting slipping of a rear wheel (2b),
- adjusting the flow rate of the first pump (10) so as to provide at most the flow called by the first apparatus (11, 21).

14. The method according to claims 7 and 9, wherein the vehicle (2) is in forward motion, comprising the steps of:
- detecting slipping of a front wheel (2a),
- adjusting the flow rate of the second pump (20) so as to provide the whole of the flow called by the second apparatus (21).

15. The method according to claims 8 and 9, wherein the front wheels of the vehicle (2) are steered wheels, comprising the steps of:
- detecting a bend made by the vehicle (2),
- adjusting the flow rate of the first and second pumps (10, 20) so as to provide the whole of the flows respectively called by the first apparatus (11) and the second apparatus (21).
